**Europäisches Patentamt**

**European Patent Office**

**Office européen des brevets**

(19)

(11) Veröffentlichungsnummer: **0 184 076 B1**

(12) # EUROPÄISCHE PATENTSCHRIFT

(45) Veröffentlichungstag der Patentschrift: **17.04.91**

(51) Int. Cl.5: **B62B 13/10, B62B 17/04**

(21) Anmeldenummer: **85114787.6**

(22) Anmeldetag: **21.11.85**

(54) **Skischlitten.**

(30) Priorität: **03.12.84 CH 5736/84**

(43) Veröffentlichungstag der Anmeldung:
**11.06.86 Patentblatt 86/24**

(45) Bekanntmachung des Hinweises auf die
Patenterteilung:
**17.04.91 Patentblatt 91/16**

(84) Benannte Vertragsstaaten:
**AT CH DE FR IT LI**

(56) Entgegenhaltungen:
DE-A- 2 554 044        DE-C- 743 189
FR-A- 2 311 704        FR-A- 2 364 672
GB-A- 2 051 300        US-A- 2 848 251

(73) Patentinhaber: **Evequoz, Jean-Yves**

**CH-1099 Villars-Tiercelin(CH)**

(72) Erfinder: **Evequoz, Jean-Yves**

**CH-1099 Villars-Tiercelin(CH)**

(74) Vertreter: **Lauer, Joachim, Dr.**
**Hug Interlizenz AG Austrasse 44 Postfach**
**CH-8045 Zürich(CH)**

**Beschreibung**

Die vorliegende Erfindung bezieht sich auf einen Skischlitten gemäss dem Oberbegriff des Patentanspruchs 1. Ein solcher Skischlitten ist beispielsweise bekannt aus der FR-A-2 364 672.

Es ist die Aufgabe der vorliegenden Erfindung, einen Skischlitten der vorgenannten Art so zu verbessern, dass er leichter und präziser zu fahren und somit insgesamt besser zu beherrschen ist. Gemäss der Erfindung wird dies durch einen Skischlitten mit den Merkmalen des Patentanspruchs 1 erreicht.

Vorteilhafte Ausführungsformen können aus den abhängigen Ansprüchen entnommen werden.

Im folgenden wird ein Ausführungsbeispiel des erfindungsgemässen Skischlittens, unter Bezugnahme auf die beiliegenden Zeichnungen, näher erläutert. In den Zeichnung zeigen:

Fig. 1    eine schematische Seitenansicht eines Ausführungsbeispiels des erfindungsgemässen Skischlittens,

Fig. 2    eine schematische Ansicht des Skischlittens von oben,

Fig. 3    eine detaillierte, teilweise geschnittene Seitenansicht der Gelenkverbindung zwischen Tragarm und Hinterski,

Fig. 4    eine detaillierte, teilweise geschnittene Seitenansicht der Gelenkverbindung zwischen Tragarm und Lenkvorrichtung, und

Fig. 5    eine Seitenansicht eines Ringfederelementes der Gelenkverbindung zwischen Tragarm und Hinterski in belastetem, verformtem Zustand.

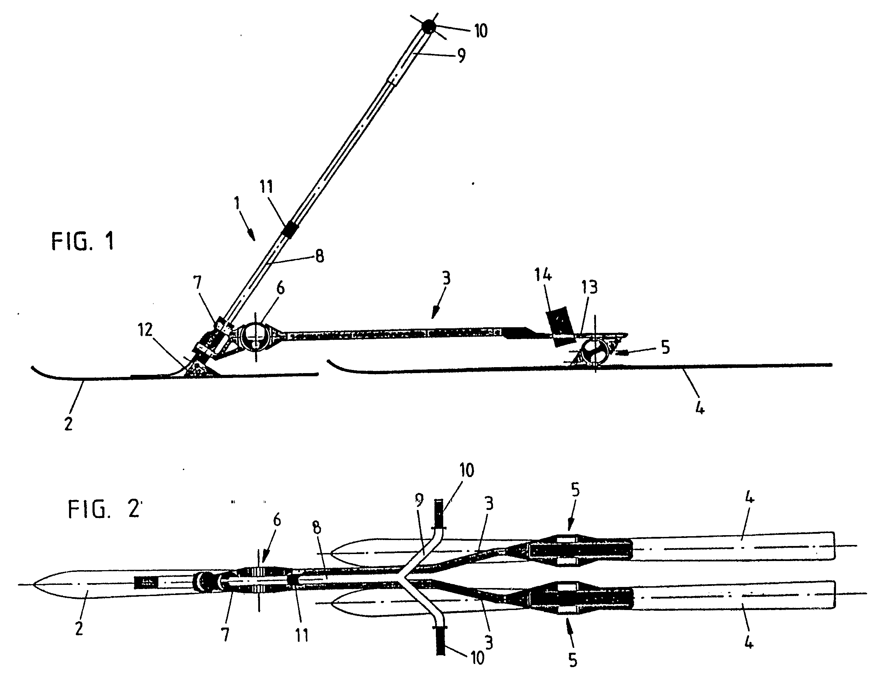

Wie aus den Fig. 1 und 2 ersichtlich ist, besteht der Skischlitten im wesentlichen aus einer Lenkvorrichtung, generell mit 1 bezeichnet, die einen Vorderski 2 trägt, aus zwei im wesentlichen horizontal verlaufenden Tragarmen, die generell mit 3 bezeichnet sind, und aus zwei Hinterskiern 4, die an den Tragarmen 3 befestigt sind.

Die Verbindung zwischen den Tragarmen 3 und den Hinterskiern 4 erfolgt mit Hilfe von ersten Gelenkverbindungen 5, während die Tragarme 3 anderenends mittels zweiter Gelenkverbindungen 6 an einem Lagerglied 7 befestigt sind. Das Lagerglied 7 umgreift die Lenksäule 8 der Lenkvorrichtung 1 in der Weise, dass die Lenk säule 8 gegenüber dem Lagerglied 7 drehbar, jedoch gegen axiale Verschiebung gesichert ist. Am oberen Ende der Lenksäule 8 ist ein Lenker 9 angebracht, der endseitig je einen Handgriff 10 trägt. Die Lenksäule 8 ist vorzugsweise teilbar ausgebildet, um den Transport des Skischlittens zu erleichtern. Zum Zusammenfügen der beiden Lenksäulenteile kann eine Muffe 11 vorgesehen sein.

Am unteren Ende der Lenksäule 8 ist der Vorderski 2 mittels eines Verbindungsgliedes 12 in bekannter Weise schwenkbar befestigt, wobei ein nicht näher dargestelltes, elastisches Element vorgesehen sein kann, welches das Bestreben hat, den Vorderski 2 in einer im wesentlichen zu den Tragarmen 3 parallelen Ruhelage zu halten. Jeder der Tragarme 3 ist im Bereich seines hinteren Endes mit einer Stützplatte 13 zur Aufnahme der Schuhe des Benutzers sowie mit einer daran befestigten Schlaufe 14 zum Festhalten der Schuhe versehen.

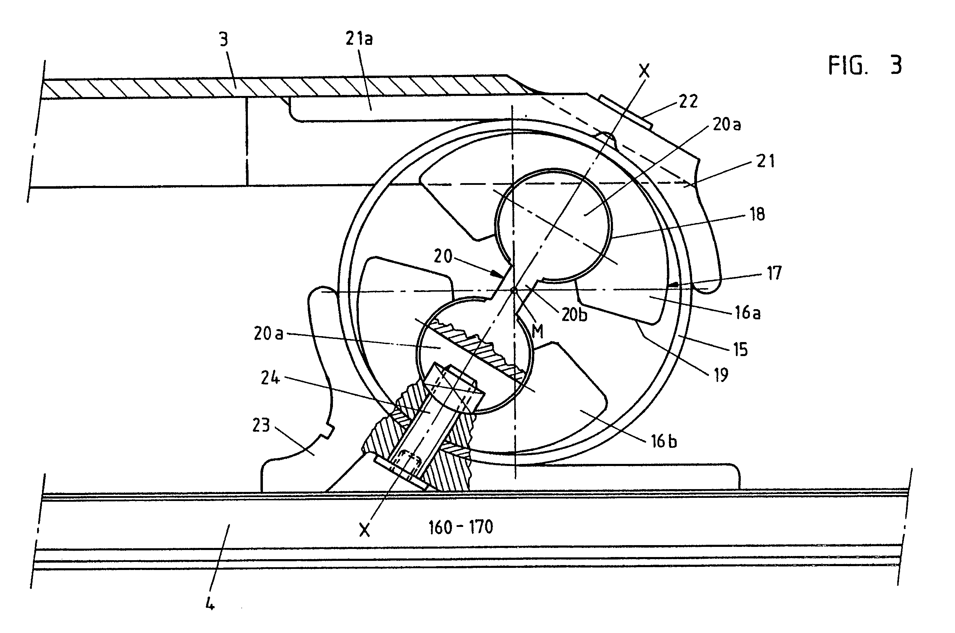

Aus der Fig. 3 ist im einzelnen die genaue Ausbildung des ersten Verbindungsgliedes 5 zu entnehmen. Das Verbindungsglied ist als Ringfederelement ausgebildet und umfasst ein geschlossenes ringförmiges Federungsglied 15, welches in der Ringebene elastisch verformbar ist. Vorzugsweise besteht dieses Federungsglied 15 im Interesse geringen Gewichtes aus glasfaserverstärktem Kunststoff; er kann aber ebensogut aus Stahl oder einem anderen, geeigneten Werkstoff hergestellt sein. Innerhalb des Federungsgliedes 15 sind zwei Anschlussglieder 16a und 16b angeordnet, deren Breite derjenigen des Federungsgliedes 15 entspricht und die vorzugsweise aus Aluminium gefertigt sind. Jedes der beiden Anschluss glieder 16a und 16b besitzt im Querschnitt gebogene Gestalt, mit einer konvex gekrümmten Aussenfläche 17, die an die Innenfläche des ringförmigen Federungsgliedes 15 anliegt, und einer konkav gekrümmten Innenfläche 18. Die Krümmung der konvexen Aussenfläche 17 entspricht in einem Mittelbereich der Krümmung des Federungsgliedes 15 und nimmt gegen die beiden Enden hin zu, d.h. der Krümmungsradius wird kleiner.

Jedes der beiden Anschlussglieder 16a und 16b erstreckt sich über einen Zentriwinkel bezüglich der Ringfederelementachse M von weniger als 180 grad. Die Stirnflächen 19 der Anschlussglieder 16a und 16b sind abgeschrägt, etwa in radialer Richtung bezüglich der Ringfederelementachse M, und bilden bei elastischer Verformung des Ringfederelementes Anschlagflächen, wie im folgenden noch näher erläutert werden wird. Die beiden Anschlussglieder 16a und 16b sind innerhalb des Federungsgliedes 15 zumindest annähernd diametral gegenüberliegend angeordnet, und dazwischen ist ein Stützglied 20 eingefügt, welches im wesentlichen längliche Gestalt mit zwei vergrösserten Endbereichen 20a und einem Verbindungssteg 20b aufweist. Die beiden Endbereiche 20a besitzen gekrümmte Aussenflächen, welche korrespondierend zur konkaven Innenfläche 18 der Anschlussglieder 16a und 16b ausgebildet sind. Da sich die Innenflächen 18 über einen Winkel von mehr als 180 grad erstrecken, werden die beiden Anschlussglieder 16a und 16b durch das Stützglied 20 festgehalten und somit gegen laterale Verschiebung entlang der Achse X-X gesichert. Eine Verschwenkung der Anschlussglieder 16a und 16b gegenüber dem Stützglied 20 ist hingegen möglich.

Das eine Anschlussglied 16a ist mit dem Federungsglied 15 sowie mit einer Lasche 21 verbunden, z.B. mittels einer Schraube 22. Die Lasche 21 ihrerseits ist im Bereich eines abstehenden Armes 21a mit dem einen der Tragglieder 3 verbunden. Das andere Anschlussglied 16b ist ebenfalls mit dem Federungsglied 15 sowie mit einem Support 23 verbunden, z.B. mittels einer Schraube 24.

In der Mitte der vergrösserten Endbereiche 20a des Stützgliedes 20 ist eine Aussparung vorgesehen, um Platz für die Schraubenmutter zu schaffen. Der Support 23 ist an dem einen Hinterski 4 befestigt. Die Längsachse X-X des Stützgliedes 20 ist gegenüber der Längsachse des Tragarmes 3 geneigt angeordnet und schliesst mit dieser einen Winkel von ca. 60 ° ein.

Das vorstehend beschriebene Ringfederelement, welches die Verbindung zwischen Tragarm 3 einerseits und Hinterski andererseits herstellt, erlaubt eine Verschwenkung der Hinterskis 4 gegenüber dem Tragarm 3 wie auch eine Federungshubbewegung des Hinterskis 4 gegenüber dem Tragarm 3 durch elastische Verformung des Federungsgliedes 15. Eine Querverschwenkung des Hinterskis 4 aus der Längsachse des Skischlittens heraus ist jedoch nicht möglich. Die Verschwenkung des Hinterskis 4 gegenüber dem Tragarm 3 innerhalb einer in Fahrtrichtung liegenden Vertikalebene wird dadurch ermöglicht, dass sich die beiden Anschlussglieder 16 a und 16 b über einen kleineren Winkel als 180 ° erstrecken. Bei dieser Verschwenkung nähern sich zwei einander gegenüberliegende Stirnflächen 19 je eines der Anschlussglieder 16a und 16b, bis sie schliesslich gegeneinander zur Auflage kommen und so den Verschwenkungswinkel begrenzen. Infolge der elastischen Ausbildung des Federungsgliedes 15 kehren der Hinterski 4 und der Tragarm 3 bei Entlastung wieder in ihre im wesentlichen parallele Ruhelage zurück.

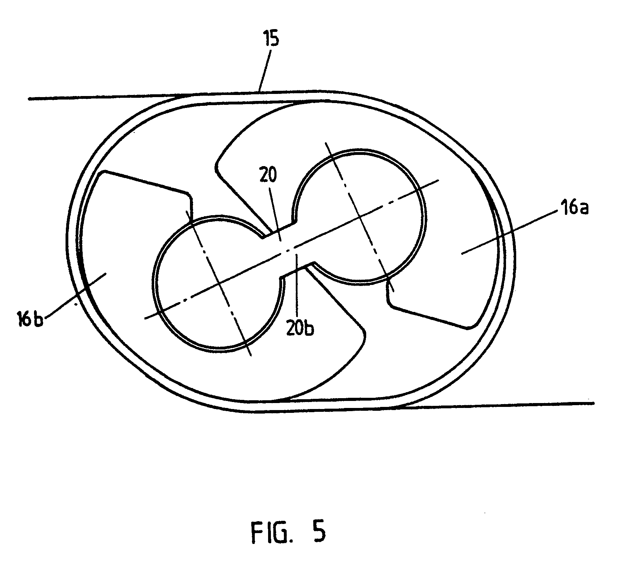

In der Fig. 5 ist das Ringfederelement in elastisch deformiertem Zustand gezeigt, wie er z.B. bei maximaler Einfederung des Hinterskis 4 gegenüber dem Tragarm 3 auftritt. Das Federungsglied 15 ist in eine etwa ovale Form deformiert und die beiden Anschlussglieder 16a und 16b sind gegenüber dem Stützglied 20 gegensinnig verschwenkt. Durch Anlage der abgeschrägten Endflächen der Anschlussglieder 16a und 16b an den Steg 20b des Stützgliedes 20 wird der Federungsweg begrenzt. Entsprechendes gilt für den Zustand maximaler Ausfederung des Hinterskis 4 gegenüber dem Tragarm 3; dann wird die jeweils gegenüberliegende Anschlagfläche der Anschlussglieder 16a und 16b am Steg 20b des Stützgliedes 20 anliegen und den Federweg begrenzen.

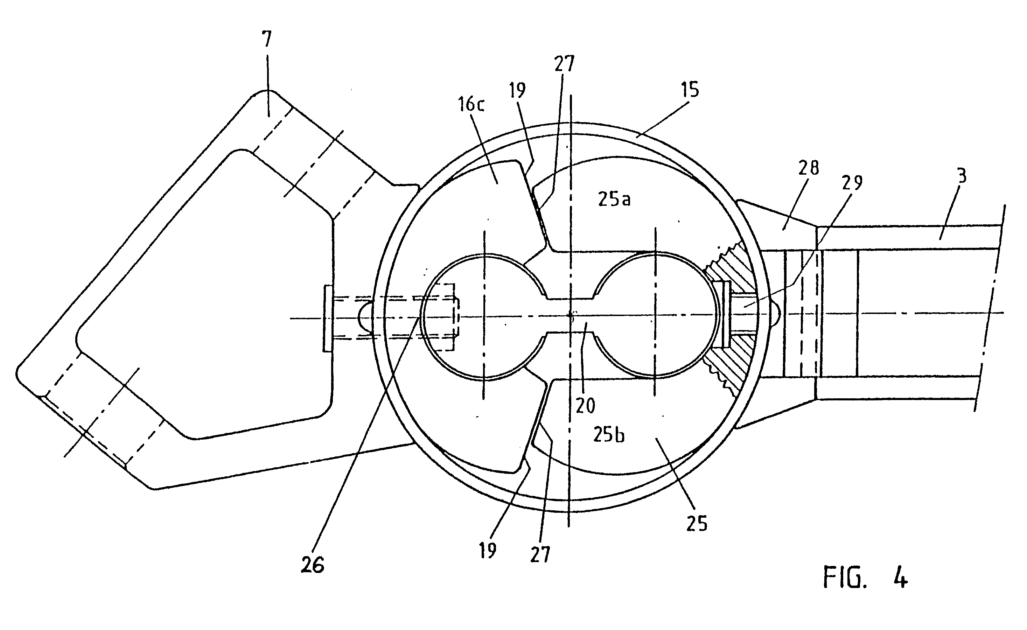

Aus der Fig. 4 ist die Ausbildung der zweiten Gelenkverbindung ersichtlich, die zum Anschluss des vorderen Endes der Tragarme 3 an das Lagerglied 7 der Lenkvorrichtung 1 dient. In entsprechender Weise ist ein ringförmig geschlossenes Federungsglied 15 vorgesehen, innerhalb dessen zwei Anschlussglieder 16c und 25 vorgesehen sind. Das Anschlussglied 16c ist ähnlich wie die Anschlussglieder 16a und 16b ausgebildet und erstreckt sich über einen Winkel von weniger als 180 grad. Es ist mittels einer Schraube 26 am Federungsglied 15 und am Lagerglied 7 befestigt; im übrigen gelten die im Zusammenhang mit den Anschlussgliedern 16a und 16b gemachten Ausführungen bezüglich Form, Ausbildung und Material. Das Anschlussglied 25 ist im Querschnitt ebenfalls bogenförmig, erstreckt sich jedoch über einen Winkel von mehr als 180 grad. Diese beiden Erstreckungswinkel ergeben zusammen 360 grad, und die beiden Stirnflächen 19 des Anschlussgliedes 16c liegen gegen die beiden Stirnflächen 27 des Anschlussgliedes 25 auf.

Das Anschlussglied 25 besitzt im Querschnitt ebenfalls bogenförmige Gestalt und weist zwei Schenkel 25a und 25b auf. Die konvexe Aussenfläche des Anschlussgliedes 25 besitzt nur in einem kleineren Mittelbereich die gleiche Krümmung wie die Innenfläche des Federungsgliedes 15, während die Krümmung im Bereich der beiden Schenkel 25a und 25b grösser, d.h. der Krümmungsradius kleiner ist. Die konkave Innenfläche ist bezüglich der Krümmung wie-der gleich ausgebildet wie das Anschlussglied 16c mit dem Unterschied, dass sich die gekrümmte Fläche nur über einen Winkel von 180 grad erstreckt. Zwischen den beiden Anschlussgliedern 16c und 25 ist in entsprechender Weise ein Stützglied 20 eingefügt, dessen Längsachse aber im wesentlichen horizontal, d.h. parallel zur Längsachse der Tragarme 3 und damit zur Lauffläche der Hinterskier 4 erstreckt. Die Ausbildung der Stützglieder ist entsprechend wie im Zusammenhang mit der Gelenkverbindung 5 beschrieben.

Das Anschlussglied 25 ist mittels einer Schraube 29 am Federungsglied 15 und an einem Support 28 befestigt, welcher seinerseits mit dem vorderen Ende des Tragarmes 3 verbunden ist.

Durch die Ausbildung der beiden Anschlussglieder 16c und 25, deren Stirnflächen gegeneinander aufliegen, ist nur eine beschränkte Verschwenkbarkeit der Tragarme 3 gegenüber dem Lagerglied 7 ermöglicht, und zwar entgegen der Wirkung des elastisch verformbaren Federungsgliedes 15. Diese Verformung ist dadurch ermöglicht, dass das Anschlussglied 25 im Bereich der beiden Schenkel 25a und 25b in der Breite geringer ist als der Innendurchmesser des ringförmigen Federungsgliedes 15.

Währenddem die Anschlussglieder 25 je an einem der beiden Tragarme 3 einzeln befestigt sind, erfolgt die Befestigung der Anschlussglieder 16c gemeinsam am Lagerglied 7.

**Ansprüche**

1. Skischlitten mit zwei Hinterskiern (4) und einem Vorderski (2), der in Bezug auf die Hinterskier um eine Lenkachse schwenkbar angeordnet und mit einer Lenkvorrichtung (1) verbunden ist, sowie mit zwei Tragarmen (3), die einerends mittels je einer ersten Gelenkverbindung (5) an je einem der Hinterskier (4) und andernends mittels je einer zweiten Gelenkverbindung (6) an der Lenkvorrichtung (1) befestigt sind, wobei die zweiten Gelenkverbindungen derart ausgebildet sind, dass jeder der Tragarme (3) gegenüber der Lenkvorrichtung (1) um eine zur Fahrunterlage parallele und zu seiner Längsachse senkrechten Schwenkachse elastisch verschwenkbar, bezüglich seiner Längsachse jedoch starr gelagert ist und wobei die ersten Gelenkverbindungen derart ausgebildet sind, dass jeder der Hinterskier gegenüber dem zugeordneten Tragarm um eine zu der genannten Schwenkachse parallele Achse elastisch verschwenkbar, bezüglich dazu senkrechter Achsrichtungen jedoch starr gelagert ist, dadurch gekennzeichnet, dass die zweiten Gelenkverbindungen (6) durch Ringfederelemente gebildet sind, welche ein ringförmig geschlossenes, in der Ringebene elastisch verformbares Federungsglied (15), zwei darin angeordnete, mit diesem verbundene Anschlussglieder (16c,25) und ein zwischen diesen eingefügtes Stützglied (20) aufweisen, wobei die beiden Anschlussglieder zumindest annähernd diametral gegenüberliegend angeordnet und durch im Querschnitt bogenförmige, das Stützglied jeweils teilweise umfassende Elemente mit einer gekrümmten Aussen- und Innenfläche gebildet sind, wobei die Längsachsen der Stützglieder (20) zumindest annähernd parallel zur Längsachse der Tragarme (3) verlaufen bzw. mit diesen zusammenfallen, wobei je eines der Anschlussglieder (25) im Bereich seiner beiden Schenkel (25a,25b) auf seiner Aussenfläche stärker gekrümmt ist als die Innenfläche des Federungsgliedes (15) und wobei sich die gekrümmte Innenfläche der gleichen Anschlussglieder (25) nur über einen Winkel von 180° erstreckt.

2. Skischlitten nach Anspruch 1, dadurch gekennzeichnet, dass die erste Gelenkverbindung (5) durch Ringfederelemente gebildet ist.

3. Skischlitten nach Anspruch 2, dadurch gekennzeichnet, dass die Ringfederelemente ein ringförmig geschlossenes, in der Ringebene elastisch verformbares Federungsglied (15), zwei innerhalb des Federungsgliedes angeordnete, mit diesem verbundene Anschlussglieder (16a,16b) und ein zwischen den beiden Anschlussgliedern eingefügtes Stützglied (20) aufweisen.

4. Skischlitten nach Anspruch 3, dadurch gekennzeichnet, dass die beiden Anschlussglieder (16a,16b) innerhalb des ringförmigen Federungsgliedes (15) zumindest annähernd diametral gegenüberliegend angeordnet sind.

5. Skischlitten nach Anspruch 4, dadurch gekennzeichnet, dass die Anschlussglieder (16a,16b) durch im Querschnitt bogenförmige Elemente gebildet sind, die eine konvexe, in der Krümmung zumindest teilweise an die Krümmung des ringförmigen Federungsgliedes (15) angepasste Aussenfläche (17) sowie eine konkave, gegen die Ringfederelementachse gerichtete Innenfläche (18) aufweisen.

6. Skischlitten nach Anspruch 5, dadurch gekennzeichnet, dass sich die konvex gekrümmten Aussenflächen (17) jedes der beiden Anschlussglieder des die erste Gelenkverbindung (5) bildenden Ringfederelementes über einen Zentriwinkel bezüglich der Ringfederelementachse von weniger als 180 grad erstrecken.

7. Skischlitten nach Anspruch 5, dadurch gekennzeichnet, dass sich bei den die zweiten Gelenkverbindungen (6) bildenden Ringfederelementen die konvex gekrümmte Aussenfläche (17) des einen Anschlussgliedes (16c) über einen Zentriwinkel bezüglich der Ringfederelementachse von weniger als 180 grad, diejenige des anderen Anschlussgliedes (25) aber über einen Zentriwinkel bezüglich der Ringfederelementachse von mehr als 180 grad erstrecken, wobei die Summe der beiden Winkel zumindest annähernd 360 grad beträgt.

8. Skischlitten nach Anspruch 6 oder 7, dadurch gekennzeichnet, dass das Stützglied (20) beiderends je eine konvex gekrümmte Stirnfläche aufweist, deren Krümmung zumindest annähernd der konkaven Krümmung der Innenflächen (18) der Anschlussglieder entspricht.

9. Skischlitten nach Anspruch 6 und 8, dadurch gekennzeichnet, dass je das eine Anschlussglied (16a) der die erste Gelenkverbindung (5) bildenden Ringfederelemente mit je einem Tragarm (3) und je das andere Anschlussglied (16b) desselben Ringfederelementes mit je einem Hinterski (4) verbunden ist.

10. Skischlitten nach Anspruch 7 und 8, dadurch gekennzeichnet, dass je das eine Anschlussglied (25) der die zweite Gelenkverbindung (6) bildenden Ringfederelemente mit je einem Tragarm (3) und je das andere Anschlussglied (16c) desselben Ringfederelementes gemeinsam mit der Lenkvorrichtung (1) verbunden sind.

11. Skischlitten nach Anspruch 10, dadurch gekennzeichnet, dass jeweils die beiden Anschlussglieder (25), die sich über einen Zentriwinkel bezüglich der Ringfederelementachse von mehr als 180 grad erstrecken, mit je einem der Tragarme (3) verbunden sind, während jeweils diejenigen Anschlussglieder (16c), die sich über einen Zentriwinkel bezüglich der Ringfederelementachse von weniger als 180 grad erstrecken, gemeinsam an der Lenkvorrichtung (1) befestigt sind.

12. Skischlitten nach einem der vorangehenden Ansprüche, dadurch gekennzeichnet, dass die Längsachsen der Stützglieder (20) der die ersten Gelenkverbindungen (5) bildenden Ringfederelemente gegenüber der Längsachse der Tragarme (3) geneigt verlaufen.

13. Skischlitten nach Anspruch 12, dadurch gekennzeichnet, dass der Neigungswinkel zwischen 30 und 60 grad beträgt.

14. Skischlitten nach einem der vorangehenden Ansprüche, dadurch gekennzeichnet, dass die Stirnflächen (19) der gebogenen Anschlussglieder der die ersten Gelenkverbindungen (5) bildenden Ringfederelemente abgeschrägt sind und Anschlagflächen bilden, die bei radialer Verformung des ringförmigen Federgliedes (15) gegeneinander zur Auflage kommen und damit einer weitergehenden Verformung des Federgliedes entgegenwirken.

15. Skischlitten nach einem der Ansprüche 1 bis 13, dadurch gekennzeichnet, dass die Stirnflächen (19, 27) der gebogenen Anschlussglieder der die zweiten Gelenkverbindung (6) bildenden Ringfederelemente abgeschrägt sind und gegeneinander aufliegen.

## Claims

1. Ski vehicle with two rear skis (4) and one front ski (2), which is pivotable about a steering axis with respect to the rear skis and is connected to a steering device (1), as well as with two supporting arms (3), which at one end are in each case fixed by a first swivel connection (5) to in each case one of the rear skis (4) and at the other end by means of an in each case a second swivel connection (6) to the steering device (1), the second swivel connections being constructed in such a way that each of the supporting arms is elastically pivotable with respect to the steering device (1) about a swivel axis parallel to the travel substrate and at right angles to its longitudinal axis, but is rigidly mounted with respect to the latter and in which the first swivel connections are constructed in such a way that each of the rear skis is elastically pivotable with respect to the associated supporting arm about an axis parallel to the said swivel axis, but is rigidly mounted with respect to axial directions at right angles thereto, characterized in that the second swivel connections (6) are formed by circular spring elements, which have a circularly closed, elastic member (15) elastically deformable in the ring plane, two connecting members (16c,25) connected thereto and arranged therein and a support member (20) inserted between the same, the two connecting members being positioned in at least an approximately diametrically facing manner and are formed by cross-sectionally arcuate elements in each case partly surrounding the support member and having a curved outer and inner face, the longitudinal axes of the support members (20) running at least approximately parallel to the longitudinal axis of the supporting arms (3) or coinciding therewith and in each case one of the connecting members (25) is more strongly curved on its outer face in the vicinity of its two legs (25a,25b) than the inner face of the elastic member (15) and in which the curved inner face of the same connecting members (25) only extends over an angle of 180°.

2. Ski vehicle according to claim 1, characterized in that the first swivel connection (5) is formed by circular spring elements.

3. Ski vehicle according to claim 2, characterized in that the circular spring elements have one circularly closed elastic member (15) elastically deformable in the ring plane, two connecting members (16a,16b) located within the elastic member and connected thereto and a support member (20) inserted between the two connecting members.

4. Ski vehicle according to claim 3, characterized in that the two connecting members (16a,16b) within the circular elastic member (15) are at least approximately diametrically facing one another.

5. Ski vehicle according to claim 4, characterized in that the connecting members (16a,16b) are formed by cross-sectionally arcuate elements, which have a convex outer face (17), whose curvature is at least partly adapted to the curvature of the circular elastic member (15), as well as a concave inner face (18) directed against the circular spring element axis.

6. Ski vehicle according to claim 5, characterized in that the convexly curved outer faces (17) of each of the two connecting members of the circular spring element forming the first swivel connection (5) extend over a centre angle relative to the circular spring element axis of less than 180°.

7. Ski vehicle according to claim 5, characterized in that in the case of the circular spring elements forming the second swivel connection (6) the convexly curved outer face (17) of one connecting member (16c) extends over a centre angle relative to the circular spring element axis of less than 180°, whilst that of the other connecting member (25) extends over a centre angle relative to the circular spring element axis of more than 180°, the sum of the two angles being at least approximately 360°.

8. Ski vehicle according to claims 6 or 7, characterized in that at both ends the support member (20) has a convex curved face, whose curvature at least approximately corresponds to the concave curvature of the inner faces (18) of the connecting members.

9. Ski vehicle according to claims 6 and 8, characterized in that one connecting member (16a) of the circular spring elements forming the first swivel connection (5) is connected to one supporting arm (3) and the other connecting member (16b) of the same circular spring element is connected to a rear ski (4).

10. Ski vehicle according to claims 7 and 8, characterized in that one connecting member (25) of the circular spring elements forming the second swivel connection (6) is connected to a supporting arm (3) and the other connecting member (16c) cf the same circular spring element is connected to the steering device (1).

11. Ski vehicle according to claim 10, characterized in that the two connecting members (25), which extend over a centre angle relative to the circular spring element axis of more than 180° are in each case connected to one of the supporting arms (3), whilst those connecting members (16c) extending over a centre angle relative to the circular spring element axis of less than 180° are jointly fixed to the steering device (1).

12. Ski vehicle according to one of the preceding claims, characterized in that the longitudinal axes of the support members (20) of the circular spring elements forming the first swivel connections (5) are inclined with respect to the longitudinal axis of the supporting arms (3).

13. Ski vehicle according to claim 12, characterized in that the angle of inclination is between 30 and 60°.

14. Ski vehicle according to one of the proceeding claims characterized in that the faces (19) of the curved connecting members of the circular spring elements forming the first swivel connections (5) are bevelled and form stop faces and in the case of radial deformation of the annular flexible member (15) bear against one another and consequently counteract more extensive deformation of the flexible member.

15. Ski vehicle according to one of the claims 1 to 13, characterized in that the faces (19,27) of the curved connecting members of the circular spring elements forming the second swivel connection (6) are bevelled and bear against one another.

## Revendications

1. Véhicule à skis, avec deux skis arrière (4) et un ski avant (2) qui est monté pivotant par rapport aux skis arrière autour d'un axe de direction et qui est relié à un dispositif de direction (1), ainsi qu'avec deux bras porteurs (3) qui sont chacun fixés, à une extrémité, à un ski arrière respectif (4) par l'intermédiaire d'un premier assemblage articulé respectif (5) et, à l'autre extrémité, au dispositif de direction (1) par l'intermédiaire d'un second assemblage articulé respectif (6), les seconds assemblages articulés étant conçus de telle sorte que chaque bras porteur (3) est monté élastiquement oscillant par rapport au dispositif de direction (1) autour d'un axe d'oscillation parallèle à la base de glisse et perpendiculaire à son axe longitudinal, mais cependant rigide dans la direction de son axe longitudinal, et les premiers assemblages articulés étant conçus de telle sorte que chaque ski arrière est monté élastiquement oscillant par rapport au bras porteur associé autour d'un axe parallèle à l'axe d'oscillation précité, mais cependant rigide dans les directions axiales perpendiculaires à cet axe, caractérisé en ce que les seconds assemblages articulés (6) sont constitués par des éléments élastiques annulaires qui présentent un organe de suspension (15) annulairement fermé et élastiquement déformable dans le plan de l'anneau, deux organes de raccordement (16c,25) disposés dans l'organe de suspension et assemblés à ce dernier, et un organe de soutien (20) inséré entre ces organes de raccordement, les deux organes de raccordement étant disposés au moins approximativement diamétralement opposés et étant constitués par des éléments de section cintrée, qui entourent chacun partiellement l'organe de soutien et qui présentent une face intérieure et une face extérieure courbées, les axes longitudinaux des organes de soutien (20) s'étendant au moins approximativement parallèlement à l'axe longitudinal des bras porteurs (3) ou bien coïncidant avec ce dernier, chaque organe de raccordement (25) étant, dans la région de ses deux branches (25a,25b), plus fortement courbé sur sa face extérieure que la face intérieure de l'organe de suspension (15), et la face intérieure courbée des mêmes organes de raccordement (25) ne s'étendant que sur un angle de 180°.

2. Véhicule à skis selon la revendication 1, caractérisé en ce que le premier assemblage articulé (5) est constitué par des éléments élastiques annulaires.

3. Véhicule à skis selon la revendication 2, caractérisé en ce que les éléments élastiques annulaires présentent un organe de suspension (15) annulairement fermé et élastiquement déformable dans le plan de l'anneau, deux organes de raccordement (16a,16b) disposés dans l'organe de suspension et assemblés à ce dernier, et un organe de soutien (20) inséré entre les deux organes de raccordement.

4. Véhicule à skis selon la revendication 3, caractérisé en ce que les deux organes de raccordement (16a,16b) sont disposés à l'intérieur de l'organe de suspension annulaire (15) en étant au moins approximativement diamétralement opposés.

5. Véhicule à skis selon la revendication 4, caractérisé en ce que les organes de raccordement (16a,16b) sont constitués par des éléments de section cintrée, qui présentent une face extérieure (17) convexe, de courbure au moins partiellement adaptée à celle de l'organe de suspension annulaire (15), et une face intérieure (18) concave, orientée vers l'axe de l'élément élastique annulaire.

6. Véhicule à skis selon la revendication 5, caractérisé en ce que les faces extérieures de courbure convexe (17) de chacun des deux organes de raccordement de l'élément élastique annulaire constituant le premier assemblage articulé (5), s'étendent sur un angle au centre inférieur à 180 degrés par rapport à l'axe de l'élément élastique annulaire.

7. Véhicule à skis selon la revendication 5, caractérisé en ce que, pour les éléments élastiques annulaires constituant les seconds assemblages articulés (6), la face extérieure de courbure convexe (17) d'un organe de raccordement (16c) s'étend sur un angle au centre inférieur à 180 degrés par rapport à l'axe de l'élément élastique annulaire, tandis que celle de l'autre organe de raccordement (25) s'étend sur un angle au centre supérieur à 180 degrés par rapport à l'axe de l'élément élastique annulaire, la somme des deux angles étant au moins approximativement égale à 360 degrés.

8. Véhicule à skis selon la revendication 6 ou 7, caractérisé en ce que l'organe de soutien (20) présente, aux deux extrémités, une face frontale respective de courbure convexe, dont la courbure correspond au moins approximativement à la courbure concave des faces intérieures (18) des organes de raccordement.

9. véhicule à skis selon les revendications 6 et 8, caractérisé en ce qu'un organe de raccordement (16a) des éléments élastiques annulaires qui constituent le premier assemblage articulé (5), est chaque fois relié à un bras porteur respectif (3), tandis que l'autre organe de raccordement (16b) du même élément élastique annulaire est relié à un ski arrière respectif (4).

10. Véhicule à skis selon les revendications 7 et 8, caractérisé en ce que l'organe de raccordement (25) des éléments élastiques annulaires qui constituent le second assemblage articulé (6), est chaque fois relié à un bras porteur respectif (3), tandis que les autres organes de raccordement respectifs (16c) des mêmes éléments élastiques annulaires sont conjointement reliés au dispositif de direction (1).

11. Véhicule à skis selon la revendication 10, caractérisé en ce que les deux organes de raccordement (25) qui s'étendent sur un angle au centre supérieur à 180 degrés par rapport à l'axe de l'élément élastique annulaire, sont chaque fois reliés à un des bras porteurs (3), tandis que les organes de raccordement (16c) qui s'étendent sur un angle au centre inférieur à 180 degrés par rapport à l'axe de l'élément élastique annulaire, sont conjointement fixés au dispositif de direction (1).

12. Véhicule à skis selon l'une des revendications précédentes, caractérisé en ce que les axes longitudinaux des organes de soutien (20) des éléments élastiques annulaires qui constituent les premiers assemblages articulés (5), s'étendent en inclinaison par rapport à l'axe longitudinal des bras porteurs (3).

13. Véhicule à skis selon la revendication 12, caractérisé en ce que l'angle d'inclinaison est compris entre 30 et 60 degrés.

14. Véhicule à skis selon l'une des revendications précédentes, caractérisé en ce que les faces frontales (19) des organes de raccordement cintrés des éléments élastiques annulaires qui constituent les premiers assemblages articulés (5), sont chanfreinées et forment des faces de butée qui viennent s'appliquer l'une contre l'autre en cas de déformation radiale de l'organe élastique annulaire (15), et s'opposent ainsi à la poursuite de cette déformation.

15. Véhicule à skis selon l'une des revendications 1 à 13, caractérisé en ce que les faces frontales (19,27) des organes de raccordement cintrés des éléments élastiques annulaires qui constituent le second assemblage articulé (6), sont chanfreinées et s'appliquent l'une contre l'autre.

FIG. 1

FIG. 2

FIG. 3

EP 0 184 076 B1

FIG. 4

EP 0 184 076 B1

FIG. 5